**Europäisches Patentamt**

(19) **European Patent Office**

**Office européen des brevets**

(11) Publication number : **0 080 747 B2**

# (12) NEW EUROPEAN PATENT SPECIFICATION

(45) Date of publication of the new patent
specification : **27.02.91 Bulletin 91/09**

(51) Int. Cl.⁵ : **B01D 53/00, C05F 9/04,**
**C12P 1/00**

(21) Application number : **82201380.1**

(22) Date of filing : **03.11.82**

(54) **Biological filter.**

(30) Priority : **04.11.81 NL 8104987**

(43) Date of publication of application :
**08.06.83 Bulletin 83/23**

(45) Publication of the grant of the patent :
**14.08.85 Bulletin 85/33**

(45) Mention of the opposition decision :
**27.02.91 Bulletin 91/09**

(84) Designated Contracting States :
**AT BE CH DE FR GB IT LI LU NL SE**

(56) References cited :
**WO-A-81/02394**
**AT-A- 355 058**
**DE-A- 1 915 946**
**DE-B- 1 592 784**
**US-A- 2 793 096**
**R. Helmer "Sorption und mikrobieller Abbau in**
**Bodenfiltern bei der Desodorisierung von Luft-**
**strömen", 1972, S. 58, 66, 78, 216**

(56) References cited :
**Müll und Abfall 5/74, R. Helmer**
**"Abluftreinigung in Müllkompostwerken mit**
**Hilfe von Bodenfiltern", S. 140-146**
**H.D. Zeisig et al. "Untersuchungen über Erdfil-**
**ter zur Verringerung der Geruchsbelästigung**
**aus Tierhaltungen", 1977, S. 9-11, 18-22, 32-35**

(73) Proprietor : **Nederlandse Organisatie voor**
**toegepast-natuurwetenschappelijk onderzoek**
**TNO**
**Juliana van Stolberglaan 148**
**NL-2595 CL The Hague (NL)**

(72) Inventor : **Don, Johannes Albertus**
**de Savornin Lohmanstraat 132**
**NL-3904 AW Veenendaal (NL)**
Inventor : **Feenstra, Lourens**
**Aristotelesstraat 533**
**NL-7323 NK Apeldoorn (NL)**

(74) Representative : **van der Beek, George Frans,**
**Ir. et al**
**Nederlandsch Octrooibureau**
**Scheveningseweg 82 P.O. Box 29720**
**NL-2502 LS 's-Gravenhage (NL)**

EP 0 080 747 B2

## Description

The invention relates to a biological filter for purifying gases, in particular stinking gases, in which a bed of compost screened from initial compost is provided.

It is generally known that compost filters should comprise a compost bed having a certain dimension in the direction of flow of the gas to be purified, said dimension usually being the height. The developed pressure drop over the filter bed defines the energy consumption. In order to maintain said energy consumption within defined limits filters having a large area are necessary. The initial compost may be screened for removing the fraction having the smallest possible particles. Said screened compost provides only a low reduction of resistance with respect to the initial compost.

The invention has the object to provide a filter of above mentioned type in which the resistance is reduced even more.

According to the invention, said object is achieved by the features of the characterizing portion of claim 1.

Surprisingly it is found that by said feature of the invention the pressure drop over the filter may be reduced by a factor of 20. Thereby the necessary size of the filter may decrease by a factor 2 up to 5, while the purifying action of the filter is maintained.

In an embodiment of the invention the substantially inactive constituent consists of the coarser particles of the initial compost.

Thereby, the advantage is obtained that as filter material only initial compost is used and it is not necessary to add additional material.

The invention will be elucidated here below by reference of the embodiments.

Biological filters comprise a bed of filter material formed by a medium containing micro-organisms. Usually, compost is used as medium. Such filters are used for odour removal in among other sewage water purification and destruction plants.

In the so called compost filter the compost bed has a height of approximately 1 m. The gases to be purified, in particular stinking gases, are conveyed vertically through the bed and disintegrated by the micro-organisms in the compost.

For conveying the malodourous gases an installation is necessary having a certain energy consumption. In view of said energy consumption the pressure drop in the filter bed is of great importance. If the height of the compost bed is chosen too high, the pressure drop is too high. In order to maintain the energy consumption of the installation as low as possible, the height of the filter bed is kept as low as possible. However, a too low height of the filter bed will easily induce continuous cracks resulting in leakage in the filter. A height of approximately 1 m seems to satisfy well in practise.

An example of the fraction composition of the initial compost gives the following numbers :

| Fractions having a particle size smaller than 4 mm : | 45% |
| Fractions having a particle size between 4 and 6 mm : | 20% |
| Fractions having a particle size between 6 and 10 mm : | 25% |
| Fractions having a particle size of more than 10 mm : | 10% |

The two first mentioned fractions seem to consist of active material and the two last mentioned of substantially inactive material. Thus, the conversion by the micro-organisms substantially takes place in the fractions of the smallest particles.

While by screening the fraction of the smallest particles, for example smaller than 4 mm, from the initial compost, the pressure drop of the filter bed may be reduced maximally by a factor 3, however, the activity of the filter is not sufficient by the lower content of active constituents.

Surprisingly it is found that with respect to a filter from initial compost the pressure drop may be reduced extremely, at least by a factor 10, because for the filter bed the bigger particles of the active fraction of the initial compost are used, to which the substantially inactive material having considerably bigger particles than the active fraction is added, while the operation of the filter with respect to the disintegration by micro-organisms is maintained. Thereby, for conveying malodorous air through the filter an installation may be sufficient having a very reduced energy consumption, or a smaller filter area with an equal energy consumption.

It is found, that for the substantially inactive material the coarser particles may be taken from the initial compost. Thereby, additional material to be added is not necessary.

The active fraction contains particles having a size between approximately 4 and approximately 6 mm, whereas the coarser compost particles are of a size bigger thai approximately 10 mm.

By reference of the followimg example the invention will be elucidated in detail.

Example

To a filter having non-screened compost a gas having an area load of 35 m³/m²h was supplied. Thereby, a pressure drop of 80 mm water (785 Pa) column was measured over the filter. By area load of a filter is understood the volume of conveyed gas per hour per unit of area.

For a filter filled up with the compost composition according to the invention a pressure drop of 100 mm water column (981 Pa) was found at an area load of 500 m³/m²h. Thus, with the same yield the area of the filter may be reduced extremely.

Besides the above mentioned reduction of pressure drop and decreasing of the filter area found, the compost filter according to the invention has yet the advantage that the problem of settling of the filter is reduced extremely. By the more stable stacking the pressure drop remains more constant seen in the time.

An important condition for the disintegration activity of the micro-organisms is the humidity of the compost bed. Therefore, frequently compost filters are moisturized artificially. However, an excess of water induces a high pressure drop. In a filter implemented according to the invention this is not a problem because excess of water is discharged effectively by the looser stacking of compost particles.

## Claims

1. Biological filter for purifying gases, in particular malodorous gases, in which a bed of compost screened form initial compost is provided, characterized in that the bed consists of the bigger particles of the active fraction of the initial compost mixed with a substantially inactive constituent that consists of considerably bigger particles than the active fraction, and that the sizes of the particles of the active fraction amount between approximately 4 and approximately 6 mm and of the substantially inactive constituent more than approximately 10 mm.

2. Filter according to claim 1, characterized in that the substantially inactive constituent consists of the coarser particles of the initial compost.

3. Filter according to one of the preceding claims, characterized in that the mixing ratio of the two fractions amounts to approximately 1 : 1.

## Ansprüche

1. Biologisches Filter zur Reinigung von Gasen, insbesondere von übelriechenden Gasen, in dem ein aus ursprünglichem Kompost gesiebtes Kompostbett bereitgestellt ist, dadurch gekennzeichnet, dass das Bett aus den grösseren Teilchen der aktiven Fraktion des ursprünglichen Komposts, vermischt mit einem im wesentlichen inaktiven Bestandteil besteht, der aus beträchtlich grösseren Teilchen als die aktive Fraktion besteht, und dass die Grössen der Teilchen der aktiven Fraktion zwischen etwa 4 und etwa 6 mm und die des im wesentlichen inaktiven Bestandteils mehr als etwa 10 mm betragen.

2. Filter nach Anspruch 1, dadurch gekennzeichnet, dass der im wesentlichen inaktive Bestandteil aus den gröberen Teilchen des ursprünglichen Komposts besteht.

3. Filter nach einem der vorhergehenden Ansprüche, dadurch gekennzeichnet, dass das Mischverhältnis der beiden Fraktionen etwa 1 : 1 beträgt.

## Revendications

1. Filtre biologique pour la purification de gaz, en particulier de gaz malodorants, dans lequel il est prévu une couche de compost séparée par tamisage du compost initial, caractérisé en ce que la couche est composée de plus grosses particules de la fraction active du compost initial mélangées avec un constituant sensiblement inactif composé de particules considérablement plus grosses que la fraction active, et en ce que les grosseurs des particules de la fraction active sont entre environ 4 et 6 mm et pour le constituant sensiblement inactif de plus d'environ 10 mm.

2. Filtre selon la revendication 1, caractérisé en ce que le constituant sensiblement inactif est constitué par les particules grossières du compost initial.

3. Filtre selon l'une quelconque des revendications 1 et 2, caractérisé en ce que le rapport de mélange des deux fractions est d'environ 1 : 1.